# EUROPÄISCHE PATENTSCHRIFT

(11) **EP 0 446 658 B1**
(45) Veröffentlichungstag und Bekanntmachung des Hinweises auf die Patenterteilung: **11.08.1993**
(21) Anmeldenummer: 91102331.5
(22) Anmeldetag: 19.02.1991
(51) Int. Cl.: A22C 11/00, B65B 19/34

(54) **Einrichtung und Verfahren zum Überführen von Würsten**
Method and device for transferring sausages
Procédé et dispositif pour transférer des saucisses

(30) Priorität: 12.03.1990 DE 4007803
(43) Veröffentlichungstag der Anmeldung: 18.09.1991
(73) Patentinhaber: HANDTMANN A-PUNKT AUTOMATION GMBH, D-88255 Baienfurt (DE)
(72) Erfinder: Strasser, Karl-Heinz, E-7981 Berg b. Ravensburg (DE); Röck, Martin, Dipl.-Ing. FH, W-7992 Tettnang (DE)
(74) Vertreter: Engelhardt, Guido, Dipl.-Ing.

(56) Entgegenhaltungen:
- EP-A- 0 366 904
- DE-U- 8 814 178
- FR-A- 2 187 641
- GB-A- 1 424 344
- GB-A- 2 161 445
- US-A- 1 458 653
- US-A- 3 316 103
- US-A- 4 633 652
- US-A- 4 671 042

## Beschreibung

Die Erfindung bezieht sich auf eine Einrichtung sowie ein Verfahren zum Überführen von Würsten, insbesondere Frischwürsten, von einer Wurstfüllmaschine zu einer Verpackungsmaschine.

Die in einer Wurstfüllmaschine portionierten und abgedrehten Würste werden bisher von Hand von dieser Maschine abgenommen und in Verpackungsbehältnissen einer nachgeschalteten Verpackungsmaschine eingelegt. Diese Verfahrensweise ist nicht nur sehr aufwendig und somit kostenintensiv, da für diese Arbeitsvorgänge bis zu fünf Personen benötigt werden, um die aus der Wurstfüllmaschine ausgestoßenen Würste in die Verpackungsmaschine überzuführen, sondern auch unhygienisch. Jede Wurst ist nämlich in die Hand zu nehmen und mitunter auch längere Zeit in der Hand zu halten, damit während der Zeit eines Darmwechsels in der mit hoher Portioniergeschwindigkeit arbeitenden Wurstfüllmaschine die taktweise arbeitende Verpackungsmaschine bestückt werden kann. Das Überführen von Würsten von einer Wurstfüllmaschine zu einer Verpackungsmaschine ist daher nicht rationell und auch nicht zeitgemäß.

Aufgabe der Erfindung ist es daher, eine Einrichtung sowie ein Verfahren zu schaffen, mit denen es möglich ist, die in einer Wurtsfüllmaschine portionierten und abgedrehten Würste auf maschinelle Weise und ohne daß diese dabei von Menschen berührt werden müssen, in Verpackungsbehältnisse einer Verpackungsmaschine einzulegen. Der dazu erforderliche Bauaufwand soll gering gehalten werden, vor allem aber soll erreicht werden, daß die Betriebskosten durch Personalreduzierung in einem erheblichen Maße gegenüber der bisher praktizierten Verfahrensweise gesenkt werden können und daß die unterschiedlichen Arbeitsgeschwindigkeiten der beiden miteinander verketteten Maschinen ohne Schwierigkeiten auszugleichen sind. Des weiteren soll ohne Schwierigkeiten eine Einstellung auf unterschiedliche Produkte vorgenommen werden können, und die Kapazität soll planbar sein.

Gemäß der Erfindung ist die Einrichtung zum Überführen von Würsten von einer Wurstfüllmaschine zu einer Verpackungsmaschine gekennzeichnet durch eine Ablenkvorrichtung, mittels der die in ihrer Längsrichtung von der Wurstfüllmaschine einem sich an diese anschließenden Förderband zugeführten Würste auf diesem in eine definierte Querlage ausrichtbar sind, eine Beladestation, bestehend aus einem vertikal verstellbaren Hubglied und einem diesem jeweils zustellbaren über dem Hubglied angeordneten Container, in den die aufgestauten Würste mittels des das Förderband durchgreifenden Hubgliedes in einer oder mehreren Lagen einbringbar sind, einem Speicher zum Transport der beladenen und unbeladenen Container sowie eine Entladestation, der die Container mittls des Speichers zuführbar und in dieser im Takt der Verpackungsmaschine, beispielsweise auf ein dieser zugeordnetes Transportband, entleerbar sind.

Die Ablenkvorrichtung kann hierbei in einfacher Ausgestaltung durch einen über dem Förderband angeordneten rotierend antreibbaren Drehkörper gebildet sein, an dem auf die Würste einwirkende Ablenkfinger angebracht sind.

Um die bei einem Darmwechsel anfallenden unvollständig gefüllten Würste aussortieren zu können, sollte der Ablenkvorrichtung ein in Abhängigkeit von der Wurstfüllmaschine steuerbares Ausschleußglied, beispielsweise in Form eines achssenkrecht zu dem Förderband verschwenkbaren Stabes, vorgeschaltet sein.

Das Förderband kann in vorteilhafter Weise aus einzelnen nebeneinander angeordneten Bandabschnitten bestehen, die im Bereich der Beladestation einzelne Bandabschnitte verkürzt ausgebildet sein sollten.

Die Container sollten jeweils zwei gegeneinander verschwenkbar gelagerte Halbschalen aufweisen, die in der Beladestation zwangsgesteuert in Abhängigkeit von den Verstellbewegungen des Hubgliedes und in der Entladestation taktweise, beispielsweise mittels einer pneumatisch betätigbaren Servoeinrichtung, verstellbar sind, und der Speicher kann durch ein horizontal angeordnetes kontinuierlich umlaufendes Rad, ein Band oder dgl. gebildet sein, an das die Container zum Transport zu den beiden Stationen gesteuert ankuppelbar sind.

Das Verfahren zum Überführen von Würsten von einer Wurstfüllmaschine zu einer Verpackungsmaschine ist dadurch gekennzeichnet, daß die in ihrer Längsrichtung von der Wurstfüllmaschine einem Förderband zugeführten Würste auf diesem mittels einer Ablenkvorrichtung in eine definierte Lage gebracht werden, daß die Würste sodann in einer Beladestation auf dem Förderband aufgestaut und mittels eines dieses durchgreifenden vertikal verstellbaren Hubglied in einer oder mehreren Lagen in einen über dem Förderband angeordneten Container eingeführt werden, daß daraufhin die Container mittels eines Speichers zu einer Entladestation transportiert werden, und daß schließlich in der Entladestation die in dem Container befindlichen Würste im Takt der Verpackungsmaschine, beispielsweise auf ein dieser zugeordneten Transportband, entleert werden.

Die Öffnungs- und Schließbewegungen der aus zwei Halbschalen bestehenden Container sollten hierbei in der Beladestation in Abhängigkeit von den Verstellbewegungen des Hubgliedes zwangsgesteuert werden, in der Entladestation sollten dagegen die Container im Arbeitstakt der Verpackungsmaschine, beispielsweise mittels einer ansteuerbaren Servoeinrichtung, geöffnet werden.

Wird eine Einrichtung gemäß der Erfindung ausgebildet bzw. werden Würste nach dem erfindungsgemäßen Verfahren von einer Wurstfüllmaschine in eine Verpackungsmaschine übergeführt, so ist eine maschinelle und kontinuierliche Arbeitsweise bei geringem Bedienungsaufwand gegeben. Dabei werden auch die unterschiedlichen Arbeitsgeschwindigkeiten der aneinander angeschlossenen Maschinen ausgeglichen,und die Würste werden schonend behandelt, Ausschuß wird somit weitgehend vermieden.

Des weiteren ist von Vorteil, daß die Einrichtung, mittels der die Würste in eine verpackungsgerechte Form zu bringen sind, eine hohe Leistung aufweist und auch auf unterschiedliche Produkte einstellbar ist, eine hohe Flexibilität sowie eine planbare Kapazität sind daher gegeben. Und da die Würste beim Überführen nicht von Menschen berührt werden und demnach keine manuelle Tätigkeiten notwendig sind, ist auch eine hygienische Handhabung gewährleistet. Durch die vorschlagsgmeäße Einrichtung bzw. das vorgesehene Verfahren wird somit die Wurstproduktion von der Wurstfüllmaschine bis zur Verpackung mit geringem baulichem Aufwand automatisiert.

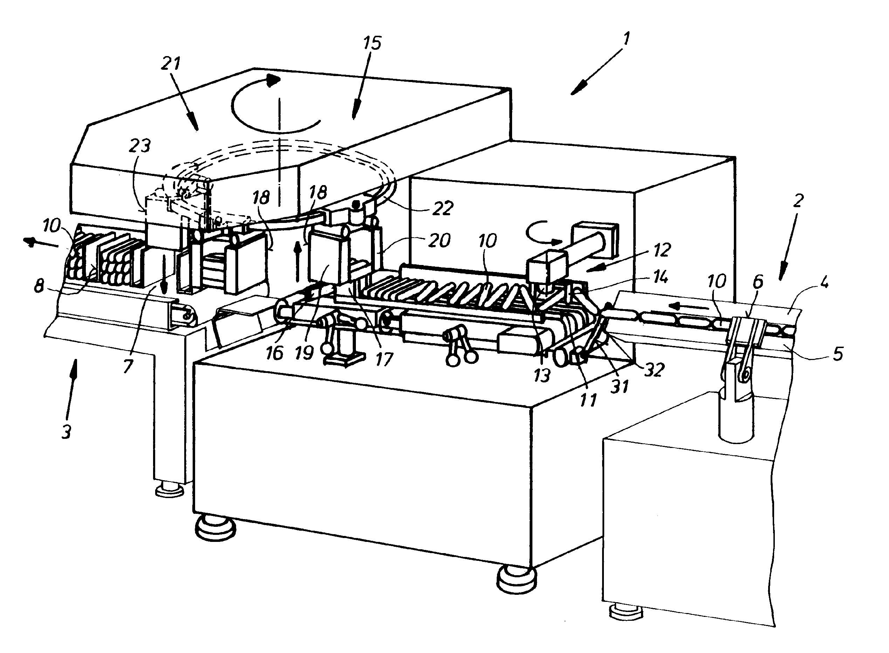

In der Zeichnung ist ein Ausführungsbeispiel der gemäß der Erfindung ausgebildeten Einrichtung zum Überführen von Würsten von einer Wurstfüllmaschine zu einer Verpackungsmaschine dargestellt, die nachfolgend im einzelnen erläutert ist.

Die mit 1 bezeichnete Einrichtung dient zur maschinellen Überführung von in einer Wurtsfüllmaschine 2 portionierten und abgedrehten Würsten 10 in eine Verpackungsmaschine 3 und besteht im wesentlichen aus einem Förderband 11, einer Ablenkvorrichtung 12, einer Beladestation 15, in der die gruppierten Würste 10 in Container 18 eingebracht werden, sowie einem Speicher 21 und einer Entladestation 23. Die Würste 10 werden hierbei zwischen zwei Bändern 4 und 5 in ihrer Längsrichtung dem Förderband 11 zugeführt und auf diesem mittels der Ablenkvorrichtung 12 gedreht, so daß sie mittels eines Hubgliedes 17, das das Förderband 11 durchgreift, in einer oder mehreren Lagen in die Container 18 eingeführt werden können. Den Bändern 4 und 5 ist eine Schneidvorrichtung 6 zugeordnet, mittels der die endlosen Wurststangen entsprechend unterteilt werden.

Die Ablenkvorrichtung 12 besteht aus einem rotierend antreibbaren Drehkörper 13, der mit Ablenkfingern 14 versehen ist. Auf diese Weise werden die Würste 10 auf dem aus einzelnen nebeneinander angeordneten Bandabschnitten, die mit einem reibdungsmindernden Belag beschichtet sind, um ein Ankleben der Würste 10 zu verhindern, gebildeten Förderband 11 derart ausgerichtet, daß sie an einem Anschlag 16 aufgestaut werden und mittels des Hubgliedes 17 in einen Container 18, der über diesem stationiert wird, einzubringen sind. Die Container 18 bestehen jeweils aus zwei Halbschalen 19 und 20, die verschwenkbar gelagert sind und in Abhängigkeit von den Verstellbewegungen des Hubgliedes 17 zwangsgesteuert werden.

Der Speicher 21 ist als kontinuierlich angetriebenes Rad 22 ausgebildet, mit dem die Codntainer 18 gesteuert trieblich verbindbar sind. Nach dem Beladen der Container 18 in der Beladestation 15 werden diese von dem Rad 22 mitgenommen und der Entladestation 23 zugeführt. Im Takt der Verpackungsmaschine 3 werden dort die Container 18 geöffnet, in dem auf deren Verstellglieder eine Servoeinrichtung einwirkt. Die Würste 10 werden dadurch in Transportbehälter 8 entleert, die auf einem Transportband 7 der Verpackungsmaschine 3 angebracht sind.

Mittels des Speichers 21 werden die unterschiedlichen Arbeitsgeschwindigkeiten der Wurstfüllmaschine 2 und der Verpackungsmaschine 3 ausgeglichen,und es wird durch diesen ein Puffer geschaffen, so daß auch bei einem Darmwechsel der taktweise arbeitenden Verpackungsmaschine 3 in ausreichender Menge Würste 10 zur Verfügung gestellt werden können. Die Wurstfüllmaschine 2 stößt dagegen die portionierten und abgedrehten Würste 10 während des Befüllens eines Darmes mit hoher Geschwindigkeit aus, bei einem Darmwechsel dagegen ist diese jedoch außer Betrieb gesetzt, so daß die Einrichtung 1 einen störungs- und unterbrechungsfreien Betrieb der Verpackungsmaschine 3 ermöglicht. Und um unvollständig gefüllte Würste, die bei einem Darmwechsel anfallen, aussortieren zu können, ist der Ablenkvorrichtung 11 ein Ausschleußglied 31 vorgeschaltet, das aus einem achssenkrecht zu dem förderband 11 verschwenkbar gelagerten Stab 32 besteht. In Abhängigkeit von der Arbeitsweise von der Wurstfüllmaschine 2 wird der Stab 32 verschwenkt, so daß eine unvollständig gefüllte und von dem Wurststrang abgeschnittene Wurst seitlich abgeführt wird.

## Patentansprüche

1. Einrichtung zum Überführen von Würsten, insbesondere Frischwürsten, von einer Wurstfüllmaschine zu einer Verpackungsmaschine,
**gekennzeichnet durch**
eine Ablenkvorrichtung (12), mittels der die in ihrer Längsrichtung von der Wurstfüllmaschine (2) einem sich an diese anschließenden Förderband (11) zugeführten Würste (10) auf diesem in eine definierte Querlage ausrichtbar sind,
eine Beladestation (15), bestehend aus einem vertikal verstellbaren Hubglied (17) und einem diesem jeweils zustellbaren über dem Hubglied (17) angeordneten Container (18), in den die aufgestauten Würste (10) mittels des das Förderband (11) durchgreifenden Hubgliedes (17) in einer oder mehreren Lagen einbringbar sind,
einem Speicher (21) zum Transport der beladenen und unbeladenen Container (18) sowie
eine Entladestation (23), der die Container (18) mittels des Speichers (21) zuführbar und in dieser im Takt der Verpackungsmaschine (3), beispielsweise auf ein dieser zugeordnetes Transportband (7), entleerbar sind.

2. Einrichtung nach Anspruch 1,
**dadurch gekennzeichnet,**
daß die Ablenkvorrichtung (12) durch einen über dem Förderband (11) angeordneten rotierend antreibbaren Drehkörper (13) gebildet ist, an dem auf die Würste (10) einwirkende Ablenkfinger (14) angebracht sind.

3. Einrichtung nach Anspruch 1 oder 2,
**dadurch gekennzeichnet,**
daß der Ablenkvorrichtung (12) ein in Abhängigkeit von der Wurstfüllmaschine (2) steuerbares Ausschleußglied (31), beispielsweise in Form eines achssenkrecht zu dem Förderband (11) verschwenkbaren Stabes (32) vorgechaltet ist.

4. Einrichtung nach einem oder mehreren der ansprüche 1 bis 3,
**dadurch gekennzeichnet,**
daß das Förderband (11) aus einzelnen nebeneinander angeordneten, vorzugsweise mit einem reibungsmindernden Belag beschichteten Bandabschnitten besteht, und daß im Bereich der Beladestation (15) einzelne Bandabschnitte verkürzt ausgebildet sind.

5. Einrichtung nach einem oder mehreren der Ansprüche 1 bis 4,
**dadurch gekennzeichnet,**
daß die Container (18) jeweils zwei gegeneinander verschwenkbar gelagerte Halbschalen (19, 20) aufweisen, die in der Beladestation (15) zwangsgesteuert in Abhängigkeit von den Verstellbewegungen des Hubgliedes (17) und in der Entladestation (23) taktweise, beispielsweise mittels einer pneumatisch betätigbaren Servoeinrichtung (24), verstellbar sind.

6. Einrichtung nach einem oder mehreren der Ansprüche 1 bis 5,
**dadurch gekennzeichnet,**
daß der Speicher (21) durch ein horizontal angeordnetes kontinuierlich umlaufendes Rad (22), ein Band oder dgl. gebildet ist, an das die Container (17) zum Transport zu den beiden Stationen (15, 21) gesteuert ankuppelbar sind.

7. Verfahren zum Überführen von Würsten, insbesondere Frischwürsten, von einer Wurstfüllmaschine zu einer Verpackungsmaschine,
**dadurch gekennzeichnet,**
daß die in ihrer Längsrichtung von der Wurstfüllmaschine (2) einem Förderband (11) zugeführten Würste (10) auf diesem mittels einer Ablenkvorrichtung (12) in eine definierte Lage gebracht werden,
daß die Würste (10) sodann in einer Beladestation (15) auf dem Förderband (11) aufgestaut und mittels eines dieses durchgreifenden vertikal verstellbaren Hubgliedes (17) in einer oder mehreren Lagen in einen über dem Förderband (11) angeordneten Container (18) eingeführt werden,
daß daraufhin die Container (19) mittels eines Speichers (21) zu einer Entladestation (23) transport werden und
daß schließlich in der Entladestation (23) die in dem Container (18) befindlichen Würste (10) im Takt der Verpackungsmaschine (3), beispielsweise auf ein dieser zugeordnetes Transportband (7), entleert werden.

8. Verfahren nach Anspruch 7,
**dadurch gekennzeichnet,**
daß die Öffnungs- und Schließbewegungen der aus zwei Halbschalen (19, 20) bestehenden Container (18) in der Beladestation (15) in Abhängigkeit von den Verstellbewegungen des Hubgliedes (17) zwangsgesteuert werden.

9. Verfahren nach Anspruch 7 oder 8,
**dadurch gekennzeichnet,**
daß die Container (18) in der Entladestation (23) im Arbeitstakt der Verpackungsmaschine (3), beispielsweise mittels einer ansteuerbaren Servoeinrichtung (24), geöffnet werden.

## Claims

1. A device for transferring sausages, particularly fresh sausages, from a sausage filling machine to a packaging machine,
**characterized** **by**,
a deflection device (12), by means of which the sausages (10) fed from the sausage filling machine (2) in a longitudinal direction along a conveyor belt (11) connected to the sausage filling machine (2) can be arranged in a defined transversal direction on the conveyor belt (11),
a loading station (15) consisting of a vertically adjustable lifting element (17) and a container (18) installed above the lifting element (17) which can be directed onto the latter, whereby the lined-up sausages (10) can be formed into one or more layers by means of the lifting element (17) which passes through the conveyor belt (11),
a storage element (21) for transporting the loaded and unloaded containers (18), and
a discharge station (23) to which the containers (18) can be fed by means of the storage element (21) and into which the containers (18) can be unloaded at the correct rate for the packing machine (3), for example onto a conveyor belt (7) which forms part of the packing machine (3).

2. A device in accordance with Claim 1,
**characterized** **in that**,
the deflection device (12) is formed by means of a rotor element (13) which can be rotatably driven and which is installed above the conveyor belt (11), and that deflection fingers (14) which act on the sausages (10) are fitted on the rotor element (13).

3. A device in accordance with Claim 1 or 2,
**characterized** **in that,**
a delivery element (31) whose control is dependent on the sausage filling machine (2), produced for example in the form of a moveable rod (32) axially perpendicular to the conveyor belt (11), is installed before the deflection element (12).

4. A device in accordance with one or more of Claims 1 to 3,
**characterized** **in that,**
the conveyor belt (11) consists of individual conveyor sections arranged one next to the other and preferably having a friction-reducing coating, and that in the part nearest to the loading station (15), the length of individual conveyor sections is shorter.

5. A device in accordance with one or more of Claims 1 to 4,
**characterized** **in that**,
each container (18) demonstrates two half shells (19, 20) mounted to enable them to be swung in against each other, which can be moved under forcible control in the loading station (15) according to the displacement movements of the lifting element (17) and which can be moved at an appropriate rate for the discharge station (23), for example by means of a pneumatically operable servo device (24).

6. A device in accordance with one or more of Claims 1 to 5,
**characterized** **in that,**
the storage element (21) is formed by means of a horizontally arranged wheel (22) which rotates continuously and a belt or similar, and that the containers (18) can be controllably connected in order to transport them to both the stations (15, 21).

7. A process for transferring sausages, particularly fresh sausages from a sausage filling machine to a packaging machine,
**characterized** **in that,**
sausages (10) fed from the sausage filling machine (2) in a longitudinal direction along a conveyor belt (11) are arranged in a defined position on the conveyor belt (11) by means of a deflection device (12),
the sausages (10) are then lined up in a loading station (15) on the conveyor belt (11) and are introduced into a container (18) in one or more layers, whereby the container (18) is installed above the conveyor belt (11) by means of a vertically moveable lifting element (17) which passes through the conveyor belt (11),
the containers (18) are then transported to a discharge station (23) by means of a storage element (21),
and finally the sausages (10) contained in the containers (18) are emptied in the discharge station (23) at the correct rate for the packing machine (3), for example onto a conveyor belt (7) which forms part of the packing machine (3).

8. A process in accordance with Claim 7,
**characterized** **in that,**
the opening and closing movements of the containers (18) which consist of two half shells (19, 20) are forcibly controlled in the loading station (15) according to the displacement movements of the lifting element (17).

9. A process in accordance with Claim 7,
**characterized** **in that**,
the containers (18) are opened in the discharge station (23) in time with the operation of the packing machine (3), for example by means of a controllable servo device (24).

## Revendications

1. Dispositif pour transférer des saucisses, notamment des saucisses fraîches, entre une machine de remplissage de saucisses et une machine destinée à l'emballage,
caractérisé par
un dispositif de déviation (12) au moyen duquel les saucisses (10) acheminées longitudinalement depuis la machine de remplissage des saucisses (2) vers une bande transporteuse (11) montée en aval, se laissent aligner dans une certaine position perpendiculaire,
une station de chargement (15) comprenant un élément de levage (17) réglable verticalement, et un conteneur (18) qui se laisse avancer vers l'élément de levage (17) et qui est disposé au-dessus de celui-ci, dans lequel sont déposées en une ou plusieurs couches, à l'aide de l'élément de levage (17) passant à travers le bande transporteuse (11), les saucisses empilées (10),
un réservoir (21) pour le transport des conteneurs (18) chargés et vides ainsi que par une
station de décharge (23) vers laquelle sont amenés les conteneurs (18) au moyen du réservoir (21) et dans laquelle les conteneurs sont vidés suivant la cadence de la machine d'emballage (3), p. ex. sur une bande transporteuse (7) qui lui est attribuée.

2. Dispositif d'après la revendication 1,
caractérisé en ce que
le dispositif de déviation (12) est formé par un corps rotatif entraîné (13) disposé au-dessus de la bande transporteuse (11) et sur lequel sont montés des bras de déviation (14) agissant sur les saucisses (10).

3. Dispositif d'après la revendication 1 ou 2,
caractérisé en ce que,
en amont du dispositif de déviation (12), il soit disposé un élément d'évacuation (31) commandé en dépendance de la machine de remplissage des saucisses (2) et formé p. ex. par une barre (32) pivotant perpendiculairement à l'axe de la bande transporteuse (11).

4. Dispositif d'après une ou plusieurs des revendications 1 à 3,
caractérisé en ce que
la bande transporteuse (11) consiste de sections individuelles disposées l'une à côté de l'autre et recouvertes de préférence d'une couche diminuant la friction, et qu'au niveau de la station de chargement (15), diverses sections soient plus courtes.

5. Dispositif d'après une ou plusieurs des revendications 1 à 4,
caractérisé en ce que
les conteneurs (18) comportent respectivement deux demi-coupelles (19, 20) pivotant l'une par rapport à l'autre, et réglées dans la station de chargement (15) en dépendance des mouvements de l'élément de levage (17) et, dans la station de décharge (23), en cadence, p. ex. au moyen d'un équipement servo (24) actionné pneumatiquement.

6. Dispositif d'après une ou plusieurs des revendications 1 à 5,
caractérisé en ce que
le réservoir (21) est formé par une roue (22), une bande ou un dispositif similaire, disposée horizontalement et tournant continuellement, et auxquelles les conteneurs (18) se laissent accoupler en vue du transport vers les deux stations (15, 21).

7. Précédé pour transférer des saucisses, notamment des saucisses fraîches, entre une machine de remplissage de saucisses et une machine destinée à l'emballage,
caractérisé en ce que
les saucisses (10) acheminées longitudinalement depuis la machine de remplissage des saucisses (2) vers une bande transporteuse (11) soient alignées par un dispositif de déviation (12) dans une certaine position sur la bande transporteuse,
qu'ensuite, les saucisses (10) soient empilées sur la bande transporteuse (11) dans la station de chargement (15) et qu'elles soient introduites en une ou plusieurs couches dans un conteneur (18) disposé au-dessus de la bande transporteuse (11), au moyen d'un élément de levage (17) réglable verticalement et passant à travers la bande transporteuse (11),
qu'ensuite, les conteneurs (18) soient transportés au moyen d'un réservoir (21) vers une station de décharge (23)
et que,
finalement, dans la station de décharge (23), les saucisses (10) se trouvant dans le conteneur (18) soient vidées en cadence de la machine d'emballage (3), par exemple sur une bande transporteuse (7) qui lui est attribuée.

8. Dispositif d'après la revendication 7,
caractérisé en ce que
dans la station de chargement (15), les mouvements d'ouverture et de fermeture des conteneurs (18) formés par deux demi-coupelles (19, 20) soient commandées en dépendance des mouvements de l'élément de levage (17).

9. Dispositif d'après la revendication 7 ou 8,
caractérisé en ce que
dans la station de décharge (23), les conteneurs (18) soient ouverts en cadence de la machine d'emballage (3), par exemple grâce à un équipement servo (24) qui se laisse actionner.
